# EUROPÄISCHE PATENTSCHRIFT

(11) **EP 1 012 541 B1**
(45) Veröffentlichungstag und Bekanntmachung des Hinweises auf die Patenterteilung: **26.06.2002**
(21) Anmeldenummer: 98945313.9
(22) Anmeldetag: 07.09.1998
(51) Int. Cl.: G01D 13/22, G12B 11/04

(54) **ANZEIGEINSTRUMENT**
DISPLAY INSTRUMENT
APPAREIL INDICATEUR

(30) Priorität: 10.09.1997 DE 19739628
(43) Veröffentlichungstag der Anmeldung: 28.06.2000
(73) Patentinhaber: Siemens Aktiengesellschaft, 80333 München (DE)
(72) Erfinder: OLBRICH, Helmut, D-64287 Darmstadt (DE)
(86) Internationale Anmeldenummer: EP9805662
(87) Internationale Veröffentlichungsnummer: WO9913298

(56) Entgegenhaltungen:
- EP-A- 0 135 918
- DE-A- 3 628 540
- DE-A- 4 215 150
- GB-A- 2 305 154
- US-A- 5 161 872

## Beschreibung

Die Erfindung betrifft ein Anzeigeinstrument für ein Fahrzeug mit einem auf einer drehbaren Zeigerwelle eines Meßwerkes angeordneten Zeiger mit einer Zeigernabe und einer Zeigerfahne, wobei die Zeigerfahne einen nabenseitigen, für einen Betrachter abgedeckten sowie einen nabenfemen, für den Betrachter sichtbaren Bereich aufweist.

Bei heutigen Anzeigeinstrumenton ist oftmals ein erster Bereich eines Zeigers für den Betrachter nicht sichtbar; weil dort vor dem Zeiger ein Display angeordnet ist, welches unabhängig vor dem Zeiger Informationen anzuzeigen vermag. Solche Ausführungsformen bedingen relativ lange Zeiger und führen zu beträchtlichen Zeigergewichten. Dieses Gewicht wird aufgrund des zum Massenausgleich notwendigen Gegengewichts auf der der Zeigerfahne gegenüberliegenden Seite der Nabe oftmals so hoch, daß das Drehmoment heutiger Meßwerke nicht mehr ausreichend ist, um den Zeiger rasch genug oder überhaupt zu bewegen. Wählt man für die Zeigerfahne einen geringeren Querschnitt, um sie leichter auszubilden, dann gerät die Zeigerfahne durch Schwingungen, wie sie beispielsweise in einem Kraftfahrzeug unvermeidlich sind, ins Schwingen, was das Ablesen des Anzeigeinstrumentes erschwert und den Eindruck mangelnder Qualität vermittelt.

Ein kurzer, kompakter und damit schwerer Zeiger für ein Anzeigeinstrument, der einen zusammengesetzten, geschlossenen Querschnitt aufweist, ist aus US-A-5,161,872 bekannt. Dieser Zeiger dient einer direkten Beleuchtung einer Zeigemadel mittels in der Zeigemadel angeordneter LEDs. Betrachterseitig sind die LEDs mit einer das von diesen ausgesandte Licht streuenden Linse abgedeckt.

Ein Meßinstrument mit einem um eine Meßwerkachse drehbaren Meßwerkteil und einem radial auf der Achse befestigten Zeiger offenbart EP-A-0 135 918. Zum Ausbalancieren des Zeigers weist dieser einen radial zu der Meßwerkachse in einem Führungskanal verschiebbaren Massekörper auf. Durch die, von dem Massekörper gebildete, große exzentrische Masse weist dieser Zeiger eine starke Schwingungsneigung auf.

Der Erfindung liegt das Problem zugrunde, ein Anzeigeinstrument der eingangs genannten Art so zu gestalten, daß sein Zeiger ein möglichst geringes Gewicht hat, ohne daß er zu einem Schwingen aufgrund von Erschütterungen des Anzeigeinstrumentes neigt.

Dieses Problem wird erfindungsgemäß dadurch gelöst, daß der zeigernabenseitige, abgedeckte Bereich der Zeigerfahne einen profilierten Querschnitt aufweist.

Durch einen solchen profilierten Querschnitt kann man im Vergleich zu einer Zeigerfahne aus Vollprofil das Gewicht des Zeigers bei gleicher Festigkeit wesentlich verringern. Da der profilierte Querschnitt gemäß der Erfindung abgedeckt ist, wird die Profilierung nicht sichtbar, so daß der Betrachter keinen vom gewohnten Anblick abweichenden Zeiger vor sich hat.

Gemäß einer vorteilhaften Weiterbildung der Erfindung weist der Zeiger zumindest eine Lichteinkoppelfläche auf und ist durch von einer Lichtquelle in ihn einkoppelbares Licht beleuchtbar. Dadurch kann der Zeiger insbesondere bei dunkler Umgebung zusätzlich hervorgehoben und das Anzeigeinstrument besser abgelesen werden, ohne daß der Bediener des Fahrzeugs vom Verkehrsgeschehen abgelenkt wird.

Licht kann von einer einzigen, im Bereich der Zeigernabe angeordneten Lichtquelle unabhängig von der Position des Zeigers in den Zeiger eingekoppelt werden, wenn gemäß einer vorteilhaften Weiterbildung der Erfindung die Lichteinkoppelfläche im Bereich der Zeigernabe angeordnet ist und der zeigernabenseitige Bereich der Zeigerfahne zumindest einen über seinen gesamten Bereich in Zeigerlängsrichtung durchgehend verlaufenden Steg hat.

Eine alternative Ausführungsform zeichnet sich dadurch aus, daß die Lichteinkoppelfläche von der Zeigernabe aus gesehen hinter dem zeigernabenseitigen Bereich der Zeigerfahne angeordnet ist. Bei einer solchen Ausführungsform kann die Profilierung beliebig gestaltet werden, weil keine Möglichkeit der Lichtleitung durch den profilierten Bereich hindurch geschaffen werden muß. Zum Einkoppeln des Lichtes werden dann allerdings mehrere, auf einem Kreisbogen anzuordnende Lichtquellen, eine bogenförmige Lichtquelle oder ein bogenförmiges Lichtband benötigt. Da dieses jedoch mit radialem Abstand von der Zeigernabe und meist außerhalb des Meßwerkes anzuordnen ist, führt eine solche Anordnung nicht zu Platzproblemen.

Der profilierte Querschnitt der Zeigerfahne kann unterschiedlich gestaltet sein. Er ist sehr einfach ausgebildet und erlaubt gegebenenfalls das Fluten des Lichtes von der zeigernabenseitigen Einkoppelfläche durch den gesamten Zeiger hindurch, weil der zeigemabenseitige Bereich der Zeigerfahne als H-, U-, T- oder Doppel-T-Profil ausgebildet ist.

Die Zeigerfahne ist besonders einfach herzustellen und weist sehr gute lichtleitende Eigenschaften auf, wenn gemäß einer vorteilhaften Weiterbildung der Erfindung der zeigernabenseitige Bereich der Zeigerfahne als U-Profil ausgebildet ist und die Höhe des Quersteges größer ist als die Höhe der seitlichen Stege des U.

Vorteilhaft ist der zeigemabenseitige Bereich der Zeigerfahne mit Rippen versehen, so daß die Zeigerfahne in diesem Bereich eine Fachwerkstruktur aufweist, die bei besonders geringem Gewicht dennoch eine hohe Steifigkeit des Zeigers gewährleistet. Die Rippen sind vorzugsweise in etwa vertikal oder in etwa horizontal angeordnet, wobei die horizontale Anordnung der Rippen eine besonders hohe Steifigkeit der Zeigerfahne in Querrichtung, d.h. in Richtung der Zeigerauslenkung, bietet und die vertikale Rippenanordnung die Zeigerstabilität in Richtung senkrecht zu der von der Zeigerfahne überstrichenen Ebene besonders erhöht.

Gemäß einer vorteilhaften Weiterbildung der Erfindung ist die Stabilität des Zeigers bei geringem Zeigergewicht besonders groß, wenn die Rippen wellen- oder zickzackförmig angeordnet sind. Die wellenförmige Anordnung kann das Herstellungsverfahren des Zeigers, der in der Regel ein Spritzgußbauteil aus Kunststoff ist, weiter vereinfachen, wohingegen sich mit der zickzackförmigen Anordnung ein Gewichts- und Stabilitätsoptimum des Zeigers erreichen läßt.

Besonders stabil ist der Zeiger und läßt sich leicht entformen, wenn der zeigemabenseitige Bereich der Zeigerfahne als H-Profil ausgebildet ist und die Rippen ober- und/oder unterhalb des mittleren Steges des H verlaufen. Gleiches gilt, wenn gemäß einer vorteilhaften Weiterbildung der Erfindung der zeigemabenseitige Bereich der Zeigerfahne als Doppel-T-Profil ausgebildet ist und die Rippen rechts- und/oder linksseitig des mittleren Steges des Doppel-T verlaufen.

Zur weiteren Erhöhung der Stabilität trägt es bei, wenn gemäß einer anderen Weiterbildung der Erfindung die Rippen zu beiden Seiten des Steges zueinander versetzt sind. Bei wellen- oder zickzackförmigen Rippen sind diese die Stabilität weiter erhöhend zu beiden Seiten des Steges vorzugsweise zueinander um eine halbe Teilung versetzt.

Wenn die Abdeckung durch ein Display oder einen Teil eines Zifferblatts erfolgt, kann der Zeiger zunächst zwischen diesem Display oder dem Zifferblatt und dem Meßwerk verlaufen und mit seinem Endbereich in der Ebene des Displays oder Zifferblattes oder oberhalb davon verlaufen, wenn der Zeiger von der Zeigernabe aus gesehen hinter dem zeigernabenseitigen Bereich der Zeigerfahne eine zum Betrachter hin gerichtete Abkröpfung aufweist und im Anschluß an diese Abkröpfung eine radial nach innen oder außen gerichtete Zeigerspitze hat. Auf diese Weise bleibt das Display oder ein Teil des Zifferblattes, das/der anderenfalls vom Zeiger überstrichen würde, frei für weitere Anzeigen.

Licht kann optimal in einen solchen abgekröpften Zeiger eingekoppelt werden, wenn die zum Betrachter hin gerichtete Abkröpfung zur entgegengesetzten Zeigerseite hin einen Lichteinkoppelvorsprung aufweist, welcher an seinem dem Betrachter abgewandten Ende die Lichteinkoppelfläche aufweist.

Ein besonders leichter Zeiger mit zudem sehr guter Lichtleitfähigkeit liegt dann vor, wenn der Zeiger aus Polycarbonat besteht.

Die Erfindung läßt zahlreiche Ausführungsformen zu. Zwei davon sind in der Zeichnung dargestellt und werden nachfolgend beschrieben. Die Zeichnung zeigt in
- Figur 1: einen erfindungsgemäß gestalteten Zeiger in Seitenansicht mit einem Meßwerk und einer Abdeckung,
- Figur 2: einen Querschnitt entlang Linie II-II durch den Zeiger nach der Figur 1,
- Figur 3: eine Draufsicht auf den Zeiger nach Figur 1,
- Figur 4: eine Seitenansicht einer zweiten Ausführungsform eines erfindungsgemäßen Zeigers,
- Figur 5: einen Querschnitt entlang Linie V-V durch den Zeiger nach der Figur 4,
- Figur 6: eine Draufsicht auf den Zeiger nach Figur 4.

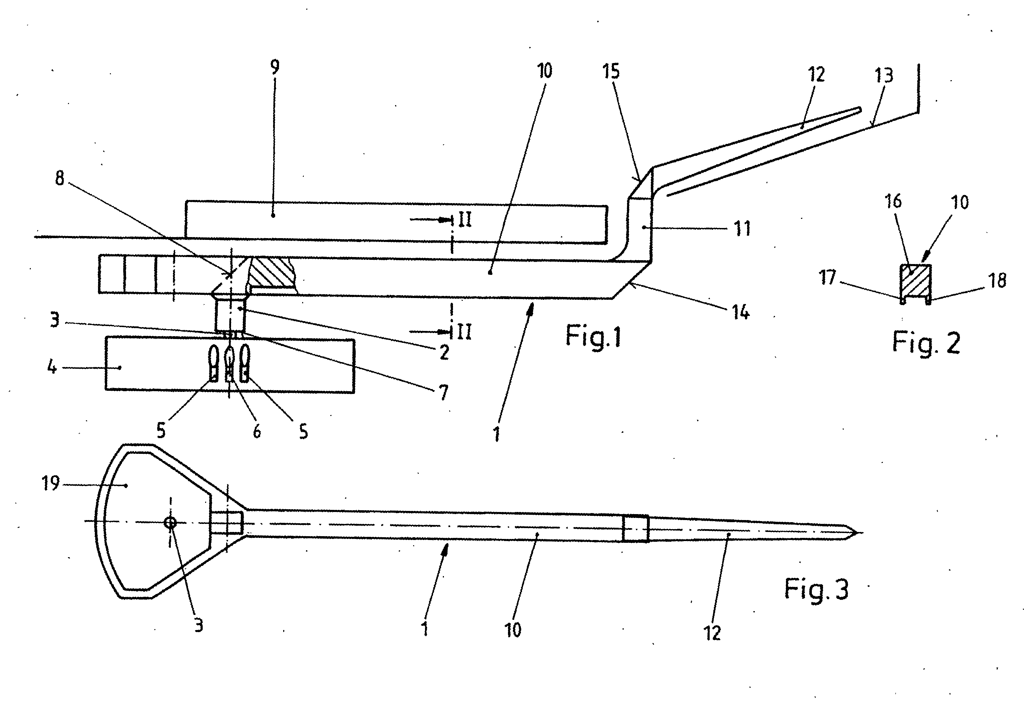

Die Figur 1 zeigt einen Zeiger 1, welcher mit einer Zeigernabe 2 auf einer Zeigerwelle 3 eines Meßwerkes 4 befestigt ist. In dem Meßwerk 4 sind zwei Lichtquellen 5 (z.B. LED oder Glühlampen) angeordnet, welche Licht über eine Lichteinkoppelfläche 7 in die Zeigernabe 2 einzukoppeln vermögen. Zusätzlich oder alternativ kann eine Lichtquelle 6 vorgesehen sein, welche Licht unmittelbar in die Zeigerwelle 3 einzukoppeln vermag, wenn letztere als Lichtleiter ausgebildet ist. Oberhalb der Zeigernabe 2 ist in dem Zeiger 1 eine Umlenkfläche 8 vorgesehen, durch die das Licht aus der Zeigemabe 2 und/oder der Zeigerwelle 3 in Längsrichtung des Zeigers 1 umgelenkt und einer Zeigerfahne zugeführt wird.

Oberhalb des Zeigers 1 ist ein Display 9 angeordnet, welches einen zeigernabenseitigen Bereich 10 der Zeigerfahne abdeckt. Dieser zeigemabenseitige Bereich 10 springt am Rand des Displays 9 mit einer Abkröpfung 11 bis oberhalb der Vorderseite des Displays 9 vor. Der Abkröpfung 11 folgt in einem nabenfernen Bereich der Zeigerfahne eine Zeigerspitze 12, welche eine Skala 13 des Anzeigeinstrumentes überstreicht. Durch Umlenkflächen 14, 15 vermag das Licht aus dem zeigernabenseitigen Bereich 10 bis in die für einen Betrachter sichtbare Zeigerspitze 12 der Zeigerfahne zu fluten und dadurch den Zeiger 1 zu beleuchten.

Die Figur 2 verdeutlicht, daß der zeigernabenseitige Bereich 10 im Querschnitt die Form eines auf dem Kopf stehenden U hat und aus Stegen 16, 17, 18 gebildet ist, welche durchgehend über die gesamte Länge des zeigernabenseitigen Bereichs der Zeigerfahne verlaufen, so daß das Licht in ihnen bis zu der Umlenkfläche 14 geleitet werden kann.

Die Draufsicht gemäß Figur 3 zeigt, daß der Zeiger 1 an der der Zeigerfahne gegenüberliegenden Seite der Nabe 2 ein Gegengewicht 19 hat, so daß die Massen zu beiden Seiten der Zeigerwelle 3 ausgeglichen sind.

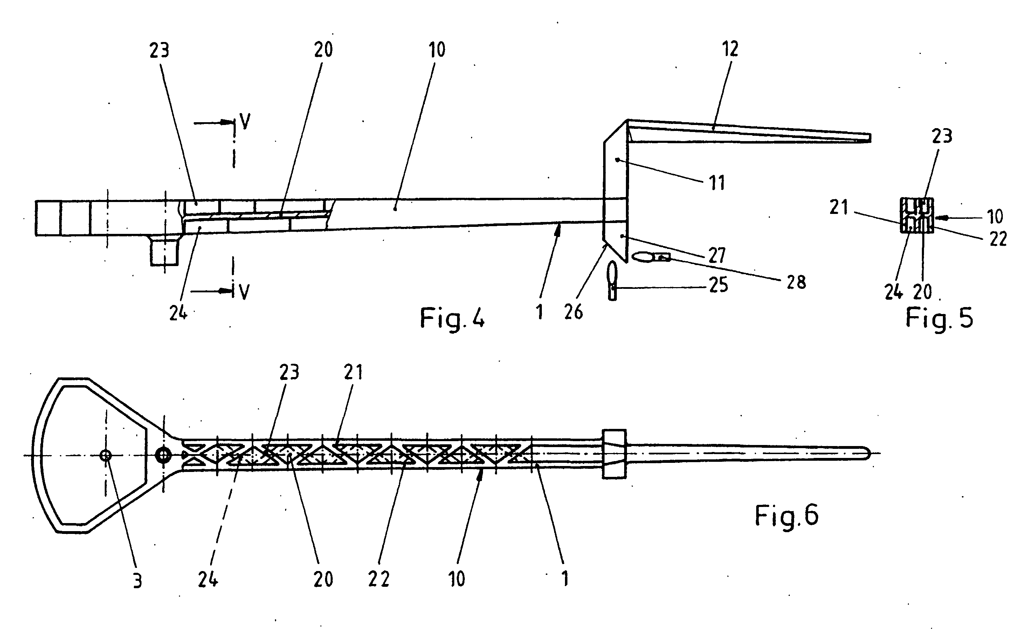

Bei der Ausführungsform nach den Figuren 4, 5 und 6 ist der zeigernabenseitige Bereich 10 der Zeigerfahne des Zeigers 1 so gestaltet, daß er ein noch geringeres Gewicht hat als bei der zuvor gezeigten Ausführungsform. Wie die Figur 5 zeigt, hat der zeigemabenseitige Bereich 10 im Querschnitt die Form eines H, welches aus einem horizontalen Steg 20 und zwei seitlichen Stegen 21, 22 gebildet ist. Diese seitlichen Stege 21, 22 sind durch oberhalb und unterhalb des horizontalen Steges 20 zickzackförmig verlaufende Rippen 23, 24 miteinander verbunden. Den zickzackförmigen Verlauf dieser Rippen 23, 24 erkennt man in Figur 6, wobei diese Figur 6 zugleich zeigt, daß die Rippen 24 unterhalb des Steges 20 zu den Rippen 23 oberhalb des Steges 20 um eine halbe Teilung zueinander versetzt sind.

Ein weiteres Unterscheidungsmerkmal der Ausführungsform nach den Figuren 4, 5 und 6 gegenüber der nach den vorangehenden Figuren liegt darin, daß zum Einkoppeln von Licht einer Lichtquelle 25 der Zeiger 1 an einem Lichteinkoppelvorsprung 27 eine Einkoppelfläche 26 hat. Der Einkoppelvorsprung ist im Bereich der Abkröpfung 11 vorgesehen und verläuft entgegengesetzt zur Abkröpfung 11. Da die Einkoppelfläche 26 bei dieser Ausführungsform bei Bewegung des Zeigers 1 sich auf einem Kreisbogen um die Zeigerwelle 3 bewegt, müssen mehrere Lichtquellen 25 auf einem Kreisbogen oder eine bogenförmige Lichtquelle oder eine bogenförmige, leuchtende Fläche zum Einkoppeln von Licht vorgesehen sein. Zusätzlich oder alternativ zu den in etwa vertikal angeordneten Lichtquellen 25 können entsprechend ausgebildete Lichtquellen 28 vorgesehen sein, welche Licht in etwa horizontal in den Lichteinkoppelvorsprung 27 einspeisen. Die Fläche 26 ist in diesem Fall teilweise oder vollständig eine Lichtumlenkfläche.

## Patentansprüche

1. Anzeigeinstrument für ein Fahrzeug mit einem auf einer drehbaren Zeigerwelle eines Meßwerkes angeordneten Zeiger mit einer Zeigernabe und einer Zeigerfahne, wobei die Zeigerfahne einen nabenseitigen, für einen Betrachter abgedeckten sowie einen nabenfernen, für den Betrachter sichtbaren Bereich aufweist, **dadurch gekennzeichnet, daß** der zeigernabenseitige, abgedeckte Bereich (10) der Zeigerfahne einen profilierten Querschnitt aufweist und als H-, U-, T- oder Doppel-T-Profil ausgebildet ist.

2. Anzeigeinstrument nach Anspruch 1, **dadurch gekennzeichnet, daß** der Zeiger (1) zumindest eine Lichteinkoppelfläche (7; 26) aufweist und durch von einer Lichtquelle (5, 6; 25, 28) in ihn einkoppelbares Licht beleuchtbar ist.

3. Anzeigeinstrument nach Anspruch 2, **dadurch gekennzeichnet, daß** die Lichteinkoppelfläche (7) im Bereich der Zeigernabe (2) angeordnet ist und der zeigemabenseitige Bereich (10) der Zeigerfahne zumindest einen über seinen gesamten Bereich in Zeigerlängsrichtung durchgehend verlaufenden Steg (16, 17, 18) hat.

4. Anzeigeinstrument nach Anspruch 2, **dadurch gekennzeichnet, daß** die Lichteinkoppelfläche (26) von der Zeigemabe (2) aus gesehen hinter dem zeigernabenseitigen Bereich (10) der Zeigerfahne angeordnet ist.

5. Anzeigeinstrument nach einem der vorhergehenden Ansprüche, **dadurch gekennzeichnet, daß** der zeigernabenseitige Bereich (10) der Zeigerfahne als U-Profil ausgebildet ist und die Höhe des Quersteges (16) größer ist als die Höhe der seitlichen Stege (17, 18) des U.

6. Anzeigeinstrument nach einem der vorhergehenden Ansprüche, **dadurch gekennzeichnet, daß** der zeigemabenseitige Bereich (10) der Zeigerfahne mit Rippen (23, 24) versehen ist.

7. Anzeigeinstrument nach Anspruch 6, **dadurch gekennzeichnet, daß** die Rippen (23, 24) in etwa vertikal oder in etwa horizontal angeordnet sind.

8. Anzeigeinstrument nach Anspruch 6 oder 7, **dadurch gekennzeichnet, daß** die Rippen (23, 24) wellen- oder zickzackförmig angeordnet sind.

9. Anzeigeinstrument nach einem der Ansprüche 6 bis 8, **dadurch gekennzeichnet, daß** der zeigemabenseitige Bereich (10) der Zeigerfahne als H-Profil ausgebildet ist und die Rippen (23, 24) ober- und/oder unterhalb des mittleren Steges (20) des H verlaufen.

10. Anzeigeinstrument nach einem der Ansprüche 6 bis 8, **dadurch gekennzeichnet, daß** der zeigemabenseitige Bereich (10) der Zeigerfahne als Doppel-T-Profil ausgebildet ist und die Rippen rechts- und/oder linksseitig des mittleren Steges des Doppel-T verlaufen.

11. Anzeigeinstrument nach Anspruch 9 oder 10, **dadurch gekennzeichnet, daß** die Rippen (23, 24) zu beiden Seiten des Steges (20) zueinander versetzt sind.

12. Anzeigeinstrument nach Ansprüchen 8 und 11, **dadurch gekennzeichnet, daß** die wellen- oder zickzackförmigen Rippen (23, 24) zu beiden Seiten des Steges (20) zueinander um eine halbe Teilung versetzt sind.

13. Anzeigeinstrument nach einem der vorhergehenden Ansprüche, **dadurch gekennzeichnet, daß** der Zeiger (1) von der Zeigernabe (2) aus gesehen hinter dem zeigernabenseitigen Bereich (10) der Zeigerfahne eine zum Betrachter hin gerichtete Abkröpfung (11) aufweist und im Anschluß an diese Abkröpfung (11) eine radial nach innen oder außen gerichtete Zeigerspitze (12) hat.

14. Anzeigeinstrument nach Anspruch 13, **dadurch gekennzeichnet, daß** die zum Betrachter hin gerichtete Abkröpfung (11) zur entgegengesetzten Zeigerseite hin einen Lichteinkoppelvorsprung (27) aufweist, welcher an seinem dem Betrachter abgewandten Ende die Lichteinkoppelfläche (26) aufweist.

15. Anzeigeinstrument nach einem der vorhergehenden Ansprüche, **dadurch gekennzeichnet, daß** der Zeiger (1) aus Polycarbonat besteht.

## Claims

1. Indicating instrument for a vehicle having a pointer arranged on a rotatable pointer spindle of a measuring mechanism with a pointer hub and a pointer vane, the pointer vane having a region on the hub side that is covered or obscured from the viewer and a region remote from the hub that is visible for the viewer, **characterized in that** the covered region (10) of the pointer vane on the pointer hub side has a profiled cross section and is formed as an H, U, T or a double-T profile.

2. Indicating instrument according to Claim 1, **characterized in that** the pointer (1) has at least one light launching surface (7; 26) and can be illuminated by light which can be launched into it from a light source (5, 6; 25, 28).

3. Indicating instrument according to Claim 2, **characterized in that** the light launching surface (7) is arranged in the region of the pointer hub (2) and the region (10) of the pointer vane on the pointer hub side has at least one bar (16, 17, 18) extending continuously over its entire region in the longitudinal direction of the pointer.

4. Indicating instrument according to Claim 2, **characterized in that** the light launching surface (26) is arranged behind the region (10) of the pointer vane on the pointer hub side, as seen from the pointer hub (2).

5. Indicating instrument according to one of the preceding claims, **characterized in that** the region (10) of the pointer vane on the pointer hub side is formed as a U profile and the height of the crossbar (16) is greater than the height of the lateral bars (17, 18) of the U.

6. Indicating instrument according to one of the preceding claims, **characterized in that** the region (10) of the pointer vane on the pointer hub side is provided with ribs (23, 24).

7. Indicating instrument according to Claim 6, **characterized in that** the ribs (23, 24) are arranged approximately vertically or approximately horizontally.

8. Indicating instrument according to Claim 6 or 7, **characterized in that** the ribs (23, 24) are arranged in an undulating or zigzag form.

9. Indicating instrument according to one of Claims 6 to 8, **characterized in that** the region (10) of the pointer vane on the pointer hub side is formed as an H profile and the ribs (23, 24) extend above and/or below the middle bar (20) of the H.

10. Indicating instrument according to one of Claims 6 to 8, **characterized in that** the region (10) of the pointer vane on the pointer hub side is formed as a double-T profile and the ribs extend to the right and/or left side of the middle bar of the double T.

11. Indicating instrument according to Claim 9 or 10, **characterized in that** the ribs (23, 24) on either side of the bar (20) are offset in relation to one another.

12. Indicating instrument according to Claims 8 and 11, **characterized in that** the ribs (23, 24) in an undulating or zigzag form are offset by half an interval in relation to one another on either side of the bar (20).

13. Indicating instrument according to one of the preceding claims, **characterized in that** the pointer (1) has behind the region (10) of the pointer vane on the pointer hub side, as seen from the pointer hub (2), an offset (11) directed towards the viewer and, following this offset (11), a pointer tip (12) directed radially inwards or outwards.

14. Indicating instrument according to Claim 13, **characterized in that** the offset (11) directed towards the viewer has towards the opposite side of the pointer a light launching projection (27) which has the light launching surface (26) at its end facing away from the viewer.

15. Indicating instrument according to one of the preceding claims, **characterized in that** the pointer (1) consists of polycarbonate.

## Revendications

1. Appareil indicateur pour un véhicule avec une aiguille dotée d'un moyeu d'aiguille et d'une queue d'aiguille disposée sur un axe d'aiguille rotatif d'un mécanisme de mesure, la queue d'aiguille présentant une zone à proximité du moyeu, cachée pour un observateur, ainsi qu'une zone éloignée du moyeu, visible pour l'observateur, **caractérisé en ce que** la zone cachée (10) de la queue de l'aiguille, qui se trouve du côté du moyeu de l'aiguille, présente une section profilée et est configurée sous la forme d'un profilé en H, en U, en T ou en double T.

2. Appareil indicateur selon la revendication 1, **caractérisé en ce que** l'aiguille (1) présente au moins une surface d'injection de lumière (7 ; 26) et qu'elle peut être éclairée par la lumière qui peut lui être injectée depuis une source de lumière (5, 6 ; 25, 28).

3. Appareil indicateur selon la revendication 2, **caractérisé en ce que** la surface d'injection de la lumière (7) est disposée dans la zone du moyeu de l'aiguille (2) et la zone de la queue d'aiguille à proximité du moyeu d'aiguille (10) présente au moins un montant (16, 17, 18) qui s'étend continuellement sur toute sa zone dans le sens longitudinal de l'aiguille.

4. Appareil indicateur selon la revendication 2, **caractérisé en ce que** la surface d'injection de la lumière (26) vue depuis le moyeu de l'aiguille (2) est disposée derrière la zone (10) de la queue de l'aiguille qui se trouve à proximité du moyeu de l'aiguille.

5. Appareil indicateur selon l'une des revendications précédentes, **caractérisé en ce que** la zone (10) de la queue de l'aiguille qui se trouve à proximité du moyeu de l'aiguille est réalisée sous la forme d'un profilé en U et la hauteur du montant transversal (16) est supérieure à la hauteur des montants latéraux (17, 18) du U.

6. Appareil indicateur selon l'une des revendications précédentes, **caractérisé en ce que** la zone (10) de la queue de l'aiguille qui se trouve à proximité du moyeu de l'aiguille est munie de nervures (23, 24).

7. Appareil indicateur selon la revendication 6, **caractérisé en ce que** les nervures (23, 24) sont disposées approximativement dans le sens vertical ou dans le sens horizontal.

8. Appareil indicateur selon la revendication 6 ou 7, **caractérisé en ce que** les nervures (23, 24) sont disposées en forme d'ondulations ou de zigzags.

9. Appareil indicateur selon l'une des revendications 6 à 8, **caractérisé en ce que** la zone (10) de la queue de l'aiguille qui se trouve à proximité du moyeu est réalisée sous la forme d'un profilé en H et les nervures (23, 24) s'étendent au-dessus et/ou au-dessous du montant central (20) du H.

10. Appareil indicateur selon l'une des revendications 6 à 8, **caractérisé en ce que** la zone (10) de la queue de l'aiguille qui se trouve à proximité du moyeu est réalisée sous la forme d'un profilé en double T et les nervures s'étendent à droite et/ou à gauche du montant central du double T.

11. Appareil indicateur selon la revendication 9 ou 10, **caractérisé en ce que** les nervures (23, 24) sont décalées les unes par rapport aux autres vers les deux côtés du montant (20).

12. Appareil indicateur selon les revendications 8 et 11, **caractérisé en ce que** les nervures en forme d'ondulations ou de zigzags (23, 24) sont décalées les unes par rapport aux autres d'une demie séparation vers les deux côtés du montant (20).

13. Appareil indicateur selon l'une des revendications précédentes, **caractérisé en ce que** l'aiguille (1) vue depuis le moyeu de l'aiguille (2) présente derrière la zone (10) de la queue de l'aiguille qui se trouve à proximité du moyeu un coude (11) dirigé vers l'observateur et possède, à la suite de ce coude (11) une pointe d'aiguille (12) dirigée dans le sens radial vers l'intérieur ou vers l'extérieur.

14. Appareil indicateur selon la revendication 13,
**caractérisé en ce que** le coude (11) dirigé vers l'observateur présente une partie en saillie d'injection de la lumière (27) vers le côté opposé de l'aiguille, laquelle présente la surface d'injection de la lumière (26) sur son extrémité opposée à l'observateur.

15. Appareil indicateur selon l'une des revendications précédentes, **caractérisé en ce que** l'aiguille (1) est en polycarbonate.
